# FASCICULE DE BREVET EUROPEEN

(11) **EP 3 109 892 B1**
(45) Date de publication et mention de la délivrance du brevet: **09.05.2018**
(21) Numéro de dépôt: 16175871.9
(22) Date de dépôt: 23.06.2016
(51) Int. Cl.: H01J 47/02, G01T 1/29, G01T 1/185

(54) **DISPOSITIF DE DÉTECTION DE PARTICULES DE TYPE RÉSISTIF ET PROCÉDÉ DE DÉTECTION DE PARTICULES**
TEILCHENDETEKTOR VOM RESISTIVEN TYP, UND TEILCHENDETEKTIONSVERFAHREN
RESISTIVE PARTICLE-DETECTION DEVICE, AND PARTICLE-DETECTION METHOD

(30) Priorité: 23.06.2015 FR 1555754
(43) Date de publication de la demande: 28.12.2016
(73) Titulaire: COMMISSARIAT À L'ÉNERGIE ATOMIQUE ET AUX ÉNERGIES ALTERNATIVES, 75015 Paris (FR)
(72) Inventeur: AUNE, Stephan, 91120 PALAISEAU (FR)
(74) Mandataire: Cabinet Camus Lebkiri

(56) Documents cités:
- Jonathan Bortfeldt: "Development of Floating Strip Micromegas Detectors", , 28 avril 2014 (2014-04-28), pages 27-34, XP055265961, Extrait de l'Internet: URL:https://edoc.ub.uni-muenchen.de/16972/ 1/Bortfeldt_Jonathan.pdf [extrait le 2016-04-15]
- IAKOVIDIS G: "The Micromegas project for the ATLAS upgrade", JOURNAL OF INSTRUMENTATION, INSTITUTE OF PHYSICS PUBLISHING, BRISTOL, GB, vol. 8, no. 12, 9 décembre 2013 (2013-12-09), XP020254860, ISSN: 1748-0221, DOI: 10.1088/1748-0221/8/12/C12007 [extrait le 2013-12-09]
- PROCUREUR S ET AL: "Operation of a resistive Micromegas in air", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 688, 11 juin 2012 (2012-06-11), pages 75-79, XP028433141, ISSN: 0168-9002, DOI: 10.1016/J.NIMA.2012.06.013 [extrait le 2012-06-19]
- JEANNEAU F ET AL: "Performances and ageing study of resistive-anodes Micromegas detectors for HL-LHC environment", NUCLEAR SCIENCE SYMPOSIUM AND MEDICAL IMAGING CONFERENCE (NSS/MIC), 2011 IEEE, IEEE, 23 octobre 2011 (2011-10-23), pages 75-79, XP032121705, DOI: 10.1109/NSSMIC.2011.6154443 ISBN: 978-1-4673-0118-3
- BYSZEWSKI M ET AL: "Resistive-strips micromegas detectors with two-dimensional readout", JOURNAL OF INSTRUMENTATION, INSTITUTE OF PHYSICS PUBLISHING, BRISTOL, GB, vol. 7, no. 2, 28 février 2012 (2012-02-28), page C02060, XP020218914, ISSN: 1748-0221, DOI: 10.1088/1748-0221/7/02/C02060

## Description

### DOMAINE TECHNIQUE

La présente invention se rapporte à un dispositif de détection de particules de type résistif, tel qu'un détecteur de particules gazeux connus sous l'appellation « détecteur micro-mégas » (pour « MICRO MEsh GAseous Structure »). L'invention se rapporte également à un procédé de détection de particules mettant en oeuvre un dispositif de détection de particules de type résistif conforme à celui de l'invention.

### ETAT DE LA TECHNIQUE

On connaît des détecteurs micro-mégas comportant une enceinte à gaz qui est remplie d'un mélange gazeux approprié, un tel détecteur permettant l'amplification d'électrons par un processus d'avalanche.

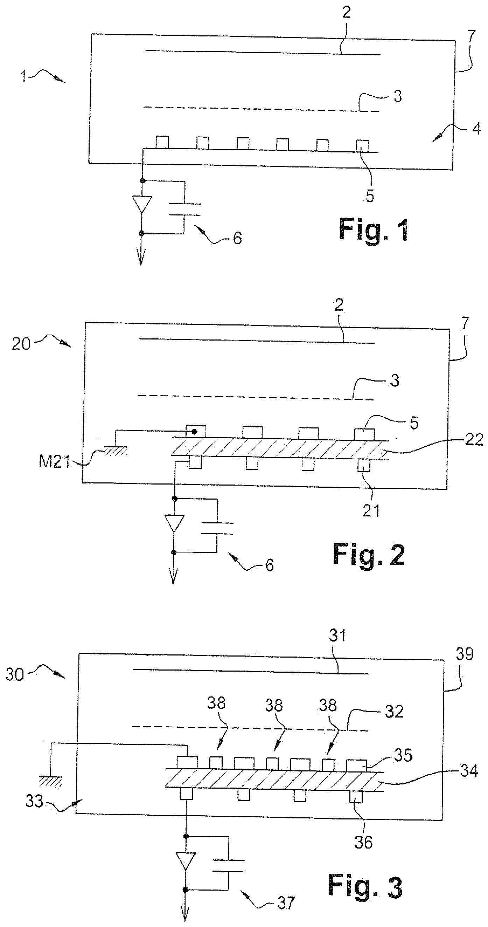

Tel qu'illustré à la figure 1, une première catégorie de détecteur micro-mégas 1 se rapporte à des détecteurs micro-mégas classiques comportant notamment une cathode 2, une micro-grille d'amplification 3 et une anode 4 munie de pistes de lecture 5 connectées à un dispositif de lecture 6. La cathode 2, la micro-grille d'amplification 3 et l'anode 4 sont disposées dans une enceinte à gaz 7. La cathode 2 fait dériver les électrons vers les pistes de lecture 5, tandis que la micro-grille d'amplification 3 permet d'amplifier le signal pour qu'il soit lu. Afin d'amplifier le signal traversant la micro-grille d'amplification 3, une tension électrique d'approximativement 500 V est appliquée sur la micro-grille d'amplification 3.

Lors de la mise en oeuvre d'un tel détecteur micro-mégas 1, la tension électrique est augmentée progressivement sur la micro-grille d'amplification 3 jusqu'à l'obtention des 500 V. Au-delà de cette valeur de 500 V, des étincelles apparaissent entre la micro-grille d'amplification 3 et les pistes de lecture 5 rendant le détecteur micro-mégas 1 momentanément inopérant. Habituellement, les étincelles se développent où se situent des impuretés, autrement dit entre les pistes de lecture 5 et la micro-grille d'amplification 3. Alors, le plasma de l'étincelle vaporise l'impureté et la tension peut continuer à être augmentée jusqu'à la valeur de 500 V.

En outre, des étincelles peuvent également se produire lorsque le détecteur micro-mégas 1 est opérationnel. Ces étincelles apparaissent généralement lorsque le flux de particules devient trop intense. Le détecteur micro-mégas 1 subit alors des claquages faisant tomber la tension et déchargeant la micro-grille d'amplification 3. Durant le temps de remontée en tension électrique de la micro-grille d'amplification 3, environ 1ms, le détecteur micro-mégas 1 est inopérant.

Le développement de claquages dans le détecteur micro-mégas 1 est souvent un facteur limitant dans des conditions extrêmes d'utilisation, notamment dans des flux très élevés de particules en engendrant des chutes de gain ainsi qu'une possible dégradation du détecteur micro-mégas 1 à long terme.

Afin de réduire l'amplitude et l'impact des claquages, une deuxième catégorie de détecteurs micro-mégas 20 a été développée, à savoir les détecteurs micro-mégas dits résistif. Comme illustré sur la figure 2, ce type de détecteur micro-mégas résistif 20, comporte en outre des pistes résistives 5 connectées à la masse commune M21 et positionnées en regard de la micro-grille 3. Les pistes de lecture 21 et les pistes résistives 5 sont en outre séparées par une couche isolante 22. La présence de ces pistes résistives 5 permet d'éviter la formation du claquage, et d'évacuer les charges vers la masse commune M21. De ce fait, les détecteurs micro-mégas résistifs 20 sont particulièrement sensibles aux impuretés. En effet, ne pouvant claquer, il n'est plus possible d'éliminer les impuretés lors de la mise sous tension de la micro-grille d'amplification 3. Si une impureté est présente ou est introduite dans le détecteur micro-mégas résistif 20, un courant de fuite important rend l'ensemble du détecteur micro-mégas résistif 20 difficilement utilisable. Aussi, les détecteurs micro-mégas résistifs 20 doivent être assemblés en salle blanche de manière à diminuer le risque d'introduction de poussière. L'utilisation de salle blanche pour l'assemblage de détecteur micro-mégas résistif 20 afin de laisser le minimum de poussières sur les pistes de lecture 21 augmente fortement les coûts de fabrication sans pour autant garantir une fiabilité de propreté à 100%.

Le document "Development of Floating Strip Micromegas Detectors" de Jonathan Bortfeldt, XP055265961,https://edoc.ub.uni-muenchen.de/16972/1/ Bortfeldt_Jonathan.pdf décrit un tel détecteur micro-megas résistif.

En outre, malgré un assemblage en salle blanche, les détecteurs micro-mégas résistifs restent peu fiables pour un usage hors laboratoire. En effet, il est possible qu'une poussière d'environ 50 µm s'introduise via l'introduction de gaz dans l'enceinte à gaz. Pour surmonter ce problème, de nombreux lavage à eau sous pression sont régulièrement réalisés.

### DESCRIPTION GENERALE

L'invention vise à résoudre les problèmes de l'état de la technique susmentionnés. Plus particulièrement, un problème que se propose de résoudre l'invention est de fournir un détecteur micro-mégas dont les conditions de fabrication sont raisonnables, tout en assurant une fiabilité de fonctionnement optimum.

A cette fin, un aspect de l'invention porte sur un dispositif de détection de particules de type résistif comprenant:
- une cathode,
- une micro-grille d'amplification, et
- une anode composée d'un isolant plan comportant des pistes résistives disposées sur une face de l'isolant plan en regard de la micro-grille d'amplification et des pistes de lecture disposées sur la face opposée de l'isolant plan, les pistes de lecture étant connectées à un système de lecture.

En outre, le dispositif de détection de particules de type résistif comporte au moins une piste conductrice positionnée entre deux pistes résistives.

Grâce à la piste conductrice positionnée entre deux pistes résistives, le dispositif de détection de particules est autonettoyant. Au démarrage mais également en cours de vie, si des poussières sont générées et/ou introduites, la piste conductrice est branchée à la masse afin de générer des champs électriques et induire une étincelle qui élimine les impuretés.

Comme les impuretés peuvent être supprimées lors de la mise en route du dispositif, il n'est pas nécessaire d'assembler le dispositif en salle blanche et le coût de fabrication s'en trouve diminué. En outre, comme les impuretés peuvent être supprimées en fonctionnement, la fiabilité du dispositif de détection de particules est améliorée.

Outre les caractéristiques principales qui viennent d'être mentionnées dans le paragraphe précédent, le dispositif de détection de particules de type résistif selon l'invention peut présenter une ou plusieurs caractéristiques supplémentaires ci-dessous, considérées individuellement ou selon toutes les combinaisons techniquement réalisables.

Dans un mode de réalisation non limitatif, le dispositif de détection de particules de type résistif comporte au moins une piste conductrice sur dix pistes résistives.

Dans un mode de réalisation non limitatif, le dispositif de détection de particules de type résistif comporte une alternance de pistes conductrices et de pistes résistives.

Dans un mode de réalisation non limitatif, la distance maximale séparant une piste conductrice d'une piste résistive voisine est égale à la moitié du pas séparant deux pistes résistives situées de part et d'autre de la piste conductrice moins la moitié de la largeur de ladite piste conductrice.

Dans un mode de réalisation non limitatif, les connexions électriques des pistes résistives et/ou des pistes conductrices sont situées en dehors d'une enceinte étanche comportant la cathode, la micro-grille d'amplification, et l'anode.

Dans un mode de réalisation non limitatif, les pistes résistives et la piste conductrice sont physiquement indépendantes les unes des autres.

Dans un mode de réalisation non limitatif, le dispositif de détection de particules de type résistif comporte au moins un contact électrique, le contact électrique étant connecté à une première extrémité à une première piste résistive et à une deuxième extrémité à une deuxième piste résistive, la piste conductrice positionnée entre les deux pistes résistives étant sectionnée au niveau du au moins un contact électrique, deux sections de la piste conductrice étant reliées entre-elles via une piste de connexion disposée dans l'isolant plan.

Un autre aspect de l'invention porte sur un procédé de détection de particules mettant en oeuvre un dispositif de détection de particules de type résistif selon l'invention.

Dans une mise en oeuvre non limitative, le procédé de détection de particules comporte, en mode détection de particules, les étapes suivantes:
- Application d'une première tension électrique déterminée à la cathode,
- Application d'une deuxième tension électrique déterminée à la micro-grille d'amplification,
- Etablissement d'une connexion électrique entre les pistes de lecture et le système de lecture,
- Etablissement d'une connexion électrique entre les pistes résistives et une masse, et
- Etablissement d'une connexion flottante à la piste conductrice.

Dans une mise en oeuvre non limitative, le procédé de détection de particules comporte, en mode nettoyage des impuretés, les étapes suivantes:
- Application d'une première tension électrique déterminée à la cathode,
- Application d'une deuxième tension électrique déterminée ou une rampe de tension à la micro-grille d'amplification,
- Etablissement d'une connexion électrique entre les pistes de lecture et le système de lecture ou d'une connexion flottante des pistes de lecture,
- Etablissement d'une connexion électrique entre les pistes résistives et une masse, et
- Etablissement d'une connexion électrique entre la piste conductrice et une masse.

Dans une mise en oeuvre non limitative, le procédé de détection de particules comportant, en mode optimisation d'amplification, les étapes suivantes:
- Application d'une première tension électrique déterminée à la cathode,
- Application d'une deuxième tension électrique déterminée ou une rampe de tension à la micro-grille d'amplification,
- Etablissement d'une connexion électrique entre les pistes de lecture et le système de lecture,
- Etablissement d'une connexion électrique entre les pistes résistives et une masse, et
- Application d'une troisième tension électrique déterminée à la piste conductrice, la troisième tension électrique déterminée étant négative.

### DESCRIPTION DES FIGURES

D'autres caractéristiques et avantages de l'invention ressortiront clairement de la description qui en est donnée ci-après, à titre indicatif et nullement limitatif, en référence aux figures annexées ci-jointes parmi lesquelles :
- la figure 1 représente, de façon schématique, un exemple de réalisation d'un dispositif de détection de particules selon l'état de la technique,
- la figure 2 représente, de façon schématique, un exemple différent de réalisation d'un dispositif de détection de particules selon l'état de la technique,
- la figure 3 représente, de façon schématique un premier exemple de réalisation d'un dispositif de détection de particules selon l'invention,
- la figure 4 illustre une vue de dessus du dispositif de détection de particules illustré à la figure 3,
- la figure 5 illustre, de façon schématique, un deuxième exemple de réalisation d'un dispositif de détection de particules selon l'invention,
- La figure 6 représente, de façon schématique, une vue en coupe A-A du dispositif de détection de particules représenté à la figure 5,
- la figure 7 illustre un synoptique des étapes d'un premier mode de mise en oeuvre d'un procédé de détection de particules conforme à l'invention,
- la figure 8 illustre un synoptique des étapes d'un deuxième mode de mise en oeuvre d'un procédé de détection de particules conforme à l'invention,
- la figure 9 illustre un synoptique des étapes d'un troisième mode de mise en oeuvre d'un procédé de détection de particules conforme à l'invention.

Pour des raisons de clarté, seuls les éléments utiles pour la compréhension de l'invention ont été représentés, et ceci sans respect de l'échelle et de manière schématique. En outre, les éléments similaires situés sur différentes figures comportent des références identiques.

### DESCRIPTION D'AU MOINS UN MODE DE REALISATION DE L'INVENTION

Les figures 1 et 2 ont déjà été décrites précédemment en référence à l'état de la technique.

La figure 3 illustre un dispositif 30 de détection de particules de type résistif conforme à celui de l'invention. Ce dispositif 30 de détection de particules de type résistif comporte:
- une cathode 31,
- une micro-grille d'amplification 32, et
- une anode 33, cette anode 33 comportant un isolant plan 34 (formant un substrat) comportant des pistes résistives 35 disposées sur une face de l'isolant plan 34 et en regard de la micro-grille d'amplification 32. L'anode 33 comporte également des pistes de lecture 36 disposées sur la face opposée de l'isolant plan 34, les pistes de lecture 36 étant reliées à un système de lecture 37.

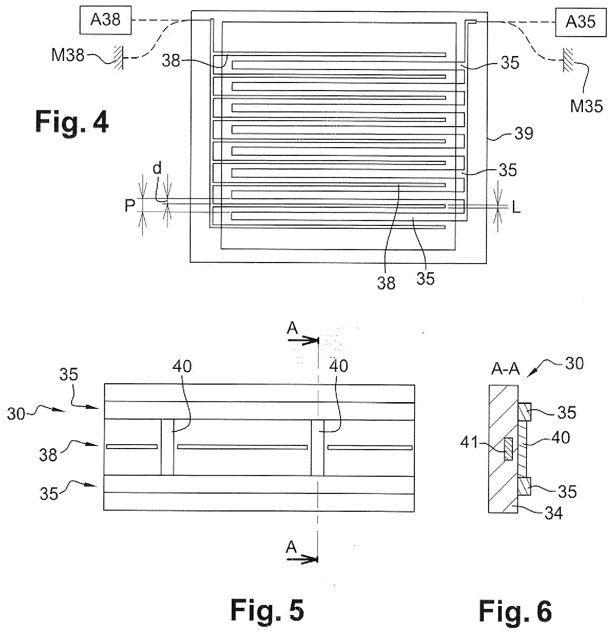

Le dispositif 30 de détection de particules de type résistif comporte en outre, dans l'exemple illustré, plusieurs pistes conductrices 38, chaque piste conductrice 38 étant positionnée entre deux pistes résistives 35. Cette alternance de pistes résistives 35 et de pistes conductrices 38 en surface active du dispositif 30 de détection de particules située sous la micro-grille d'amplification 32 est illustrée à la figure 4.

Il convient de noter que les pistes résistives 35 peuvent être connectées à une même alimentation en tension des pistes résistives A35 (ou à la masse M35) et les pistes conductrices 38 peuvent également être connectées à une même alimentation en tension des pistes conductrices A38 (ou à la masse M38). Dans cette mise en oeuvre non limitative, les connexions électriques réalisées entre les pistes résistives 35 et l'alimentation en tension des pistes résistives A35 (ou à la masse M35) sont réalisées en dehors d'une enceinte étanche 39 comportant la cathode 31, la micro-grille d'amplification 32, et l'anode 33. De même, les connexions électriques réalisées entre les pistes conductrices 38 et l'alimentation en tension des pistes conductrices A38 (ou à la masse M38) sont réalisées en dehors de l'enceinte étanche 39 comportant la cathode 31, la micro-grille d'amplification 32, et l'anode 33. Le fait que les connexions électriques soient positionnées en dehors du cadre d'étanchéité du gaz formé par l'enceinte étanche 39 permet de déconnecter électriquement une ou plusieurs piste(s) résistive(s) 35 et/ou conductrice(s) 38 sans ouvrir, et donc polluer, le dispositif 30 de détection de particules de type résistif.

Afin d'éviter de perturber le fonctionnement du dispositif 30 de détection de particules, il est avantageux que les deux types de pistes, à savoir les pistes résistives 35 et les pistes conductrices 38, n' aient pas de contact entre elles. Les pistes conductrices 38 et les pistes résistives 35 sont donc indépendantes physiquement les unes des autres (contact ohmique infini). En d'autres termes, les pistes conductrices et les pistes résistives ne se touchent pas physiquement.

Les pistes conductrices 38 peuvent être réalisées par sérigraphie de pâte polymère chargée en conducteur, par exemple en oxyde de cuivre.

Dans une mise en oeuvre non limitative, les pistes conductrices 38 sont réalisées en cuivre sur l'isolant plan 34, lequel isolant plan 34 peut être en Kapton®.

Dans une mise en oeuvre non limitative, les pistes résistives 35 sont réalisées par l'application sérigraphique de pâte polymère chargée en carbone. Pour éviter tout contact entre les pistes conductrices 38 et les pistes résistives 35, la sérigraphie doit épargner les pistes conductrices 38. Si la précision de positionnement de la toile de sérigraphie n'est pas suffisante pour éviter un contact entre les pistes conductrices 38 et les pistes résistives 35, alors un masque de protection, par exemple formé par un film polymérisable aux UV est utilisé. Ce masque de protection permet en effet de protéger les pistes réalisées en premier, par exemple les pistes conductrices 38, et permettre la dépose des secondes, dans cet exemple non limitatif, des pistes résistives 35.

L'exemple illustré sur les figures 3 et 4 n'est aucunement limitatif. Il est entendu que le dispositif 30 de détection de particules de type résistif selon l'invention peut comporter un nombre de pistes conductrices 38 différent, par exemple seulement une piste conductrice 38 sur dix pistes résistives 35.

Dans un exemple avantageux illustré à la figure 4, la distance d maximale séparant une piste conductrice 38 et une piste résistive 35 voisine est égale à la moitié du pas p séparant deux pistes résistives 35 situées de part et d'autre de la piste conductrice 38 moins la moitié de la largeur L de la piste conductrice 38 située entre les deux pistes résistives 35. Ainsi, pour un pas p de 500 µm entre deux pistes résistives 35 et une piste conductrice 38 présentant une largeur L de 80 µm, la distance d maximale entre la piste conductrice 38 et la piste résistive voisine 35 est de : (500/2) - (80/2) = 210 µm. Il s'ensuit que dans cette mise en oeuvre la distance maximale entre une impureté et une piste conductrice 38 n'excédera pas 210 µm. Cette distance est suffisamment faible pour que le champ électrique généré par la piste conductrice 38 puisse vaporiser la poussière.

Dans un exemple non limitatif illustré sur la figure 5, le dispositif de détection de particules 30 comporte des contacts électriques 40 (également connus sous l'appellation échelle). Chacun des contacts électriques 40 est connecté à une première extrémité à une première piste résistive 35 et à une deuxième extrémité à une deuxième piste résistive 35. Dans cette réalisation, la piste conductrice 38 (une seule est représentée pour des raisons de clarté) positionnée entre une première piste résistive 35 et une deuxième piste résistive 35 est sectionnée au niveau des contacts électriques 40 reliant la première piste résistive 35 et la deuxième piste résistive 35 afin de ne pas toucher les contacts électriques 40. Dans ce cas, les pistes conductrices 38 sont constituées de segments reliés entre eux par l'utilisation de pistes de connexions internes positionnées dans l'isolant plan. La figure 6 est une vue selon la coupe A-A de la figure 5 et représente une piste de connexion 41 disposée dans l'isolant plan 34.

De manière générale, les contacts électriques 40 permettent d'augmenter l'écoulement des charges et éviter le chargement en tension électrique des pistes résistives 35.

Un aspect de l'invention porte également sur un procédé de détection de particules mettant en oeuvre un dispositif de détection de particules de type résistif 30 selon l'invention.

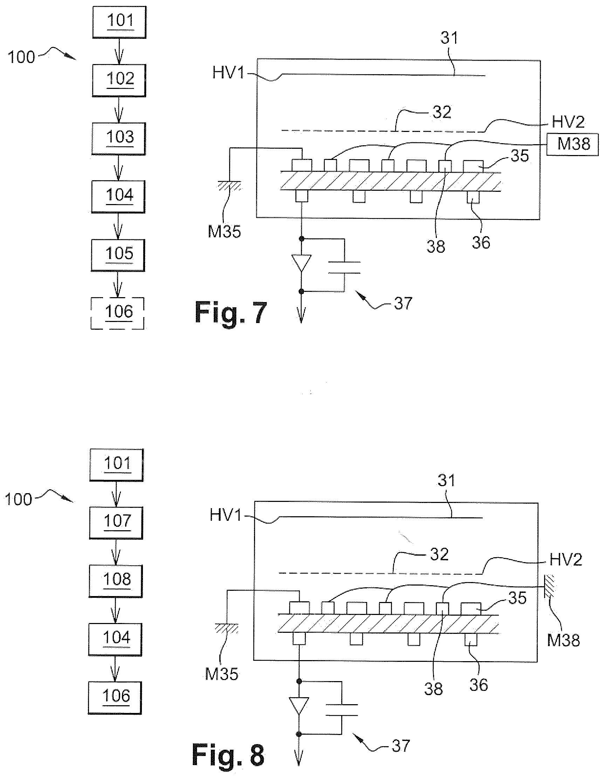

La figure 7 représente un procédé 100 de détection de particules fonctionnant en mode détection de particules et mettant en oeuvre un dispositif de détection de particules de type résistif 30 selon l'invention.

Dans cette mise en oeuvre non limitative, le procédé 100 de détection de particules comporte une étape 101 d'application d'une première tension électrique déterminée HV1 à la cathode 31.

Il comporte également une étape 102 d'application d'une deuxième tension électrique déterminée HV2 à la micro-grille d'amplification 32.

Le procédé 100 comporte en outre une étape 103 d'établissement d'une connexion électrique entre les pistes de lecture 36 et le système de lecture 37.

De plus, le procédé 100 met en oeuvre une étape 104 d'établissement d'une connexion électrique entre les pistes résistives 35 et une masse M35.

Dans ce mode de détection de particules, le procédé 100 comporte en outre une étape 105 d'établissement d'une connexion flottante à la piste conductrice 38, autrement dit aucune tension électrique n'est appliquée et aucune connexion à la masse M38 n'est établie.

Dans une telle mise en oeuvre, le champ électrique présent entre la micro-grille d'amplification 32 et les pistes résistives 35 connectées à la masse M35 dirige les charges de l'avalanche électronique liée à la détection vers les pistes résistives 35. Si les pistes conductrices 38 se chargent dans le temps sous l'effet de collection d'électrons due à l'avalanche électronique, et ce malgré l'absence de tension électrique, alors la collection d'électrons diminuera car le chargement sera négatif. Il en découle une diminution di rendement du détecteur.

Si cette diminution devient gênante, alors le procédé 100 met en oeuvre une étape 106 (représentée en pointillée sur la figure 7) d'établissement d'une connexion à la masse M38 des pistes conductrices 38. D'ailleurs une telle étape peut aussi être programmée et devenir ainsi systématique à des intervalles de temps prédéterminés.

La figure 8 représente un procédé 100 de détection de particules fonctionnant en mode nettoyage des impuretés et mettant en oeuvre un dispositif de détection de particules de type résistif 30 selon l'invention.

Dans cette mise en oeuvre non limitative, le procédé 100 de détection de particules comporte une étape 101 d'application d'une première tension électrique déterminée HV1 à la cathode 31.

Il comporte également une étape 107 d'application d'une deuxième tension électrique déterminée HV2 ou d'une rampe de tension (non illustrée) à la micro-grille d'amplification 32.

Le procédé comporte en outre une étape 108 d'établissement d'une connexion électrique entre les pistes de lecture 36 et le système de lecture 37 ou d'une connexion flottante (illustrée en pointillée sur la figure 8) des pistes de lecture 36.

Il comporte aussi une étape 104 d'établissement d'une connexion électrique entre les pistes résistives 35 et la masse M35.

De plus, le procédé 100 comporte une étape 106 d'établissement d'une connexion électrique entre la piste conductrice 38 et la masse M38.

Dans une telle mise en oeuvre, cet agencement permet de générer des champs électriques dans l'enceinte 39 et induire une étincelle préférentiellement aux endroits où se trouvent les impuretés et ainsi les éliminer.

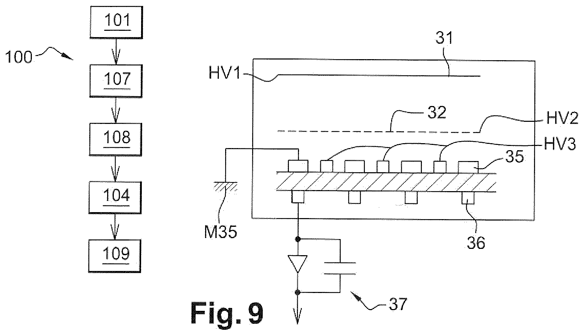

La figure 9 représente un procédé 100 de détection de particules fonctionnant en mode optimisation d'amplification et mettant en oeuvre un dispositif de détection de particules de type résistif 30 selon l'invention.

Dans cette mise en oeuvre non limitative, le procédé 100 de détection de particules comporte une étape 101 d'application d'une première tension électrique déterminée HV1 à la cathode 31.

Le procédé 100 comporte en outre une étape 107 d'application d'une deuxième tension électrique déterminée HV2 ou d'une rampe de tension (non illustrée) à la micro-grille d'amplification 32.

Il comporte aussi une étape 103 d'établissement d'une connexion électrique entre les pistes de lecture 36 et le système de lecture 37.

Le procédé 100 comporte en outre une étape d'établissement 104 d'une connexion électrique entre les pistes résistives 35 et la masse M35.

De plus, le procédé 100 comporte une étape 109 d'application d'une troisième tension électrique déterminée HV3 à la piste conductrice 38, la troisième tension électrique déterminée HV3 étant négative. Alors, de même qu'avec des pistes conductrices 38 flottantes, le champ électrique entre la micro-grille d'amplification 32 et les pistes résistives 35 connectées à la masse M35 dirige les charges de l'avalanche électronique liée à la détection vers les pistes résistives 35. Le fait que les pistes conductrices 38 soient connectées à une tension électrique négative génère un champ électrique qui focalise la collection des charges de l'avalanche électronique vers les pistes résistives 35. Par exemple, la troisième tension électrique déterminée HV3 négative est de -100V. En outre, il est préférable que la différence de tension électrique entre la micro-grille d'amplification 32 et les pistes conductrices 38, par exemple de 400 V en valeur absolue, soit plus faible que celle entre les pistes résistives 35 et la micro-grille d'amplification 32, par exemple de 500 V en valeur absolue. De plus, cette différence de tension électrique doit être suffisamment faible pour ne pas entraîner d'étincelles entre la micro-grille d'amplification 32 et les pistes conductrices 38. L'effet de focalisation induit par une tension électrique sur les pistes conductrices 38, focalisation qui repousse les charges de l'avalanche électronique, génère alors un gain du dispositif 30 de détection de particules de type résistif.

## Revendications

1. Dispositif de détection de particules de type résistif (30) comprenant:
- une cathode (31),
- une micro-grille d'amplification (32), et
- une anode (33) composée d'un isolant plan (34) comportant des pistes résistives (35) disposées sur une face dudit isolant plan (34) en regard de la micro-grille d'amplification (32) et des pistes de lecture (36) disposées sur la face opposée dudit isolant plan (34), lesdites pistes de lecture (36) étant connectées à un système de lecture (37),
ledit dispositif de détection de particules de type résistif (30) étant **caractérisé en ce qu'**il comporte une piste conductrice (38) positionnée entre deux pistes résistives (35).

2. Dispositif de détection de particules de type résistif (30) selon la revendication 1 **caractérisé en ce qu'**il comporte au moins une piste conductrice (38) sur dix pistes résistives (35).

3. Dispositif de détection de particules de type résistif (30) selon la revendication 1 **caractérisé en ce qu'**il comporte une alternance de pistes conductrices (38) et de pistes résistives (35).

4. Dispositif de détection de particules de type résistif (30) selon l'une quelconque des revendications précédentes **caractérisé en ce que** la distance (d) maximale séparant une piste conductrice (38) d'une piste résistive (35) voisine est égale à la moitié du pas (p) séparant deux pistes résistives (35) situées de part et d'autre de la piste conductrice (38) moins la moitié de la largeur (L) de ladite piste conductrice (38).

5. Dispositif de détection de particules de type résistif (30) selon l'une quelconque des revendications précédentes **caractérisé en ce que** les connexions électriques des pistes résistives (35) et/ou des pistes conductrices (38) sont situées en dehors d'une enceinte étanche (39) comportant la cathode (31), la micro-grille d'amplification (32), et l'anode (33).

6. Dispositif de détection de particules de type résistif (30) selon l'une quelconque des revendications précédentes **caractérisé en ce que** les pistes résistives (35) et la piste conductrice (38) sont physiquement indépendantes les unes des autres.

7. Dispositif de détection de particules de type résistif (30) selon l'une quelconque des revendications précédentes **caractérisé en ce qu'**il comporte au moins un contact électrique (40), le contact électrique (40) étant connecté à une première extrémité à une première piste résistive (35) et à une deuxième extrémité à une deuxième piste résistive (35), la piste conductrice (38) positionnée entre les deux pistes résistives (35) étant sectionnée au niveau du au moins un contact électrique (40), deux sections de la piste conductrice (38) étant reliées entre-elles via une piste de connexion (41) disposée dans l'isolant plan (34).

8. Procédé (100) de détection de particules mettant en oeuvre un dispositif de détection de particules de type résistif (30) selon l'une quelconque des revendications précédentes, le procédé (100) de détection de particules comportant, en mode détection de particules, les étapes suivantes:
- Application (101) d'une première tension électrique déterminée (HV1) à la cathode (31),
- Application (102) d'une deuxième tension électrique déterminée (HV2) à la micro-grille d'amplification (32),
- Etablissement (103) d'une connexion électrique entre les pistes de lecture (36) et le système de lecture (37),
- Etablissement (104) d'une connexion électrique entre les pistes résistives (35) et une masse (M35), et
- Etablissement (105) d'une connexion flottante à la piste conductrice (38).

9. Procédé (100) de détection de particules mettant en oeuvre un dispositif de détection de particules de type résistif (30) selon l'une quelconque des revendications 1 à 7, le procédé (100) de détection de particules comportant, en mode nettoyage des impuretés, les étapes suivantes:
- Application (101) d'une première tension électrique déterminée (HV1) à la cathode (31),
- Application (107) d'une deuxième tension électrique déterminée (HV2) ou une rampe de tension à la micro-grille d'amplification (32),
- Etablissement (108) d'une connexion électrique entre les pistes de lecture (36) et le système de lecture (37) ou d'une connexion flottante des pistes de lecture (36),
- Etablissement (104) d'une connexion électrique entre les pistes résistives (35) et une masse (M35), et
- Etablissement (106) d'une connexion électrique entre la piste conductrice (38) et une masse (M38).

10. Procédé (100) de détection de particules mettant en oeuvre un dispositif de détection de particules de type résistif (30) selon l'une quelconque des revendications 1 à 7, le procédé (100) de détection de particules comportant, en mode optimisation d'amplification, les étapes suivantes:
- Application (101) d'une première tension électrique déterminée (HV1) à la cathode (31),
- Application (107) d'une deuxième tension électrique déterminée (HV2) ou une rampe de tension à la micro-grille d'amplification (32),
- Etablissement (103) d'une connexion électrique entre les pistes de lecture (36) et le système de lecture (37),
- Etablissement (104) d'une connexion électrique entre les pistes résistives (35) et une masse (M35), et
- Application (109) d'une troisième tension électrique déterminée (HV3) à la piste conductrice (38), ladite troisième tension électrique déterminée (HV3) étant négative.

## Patentansprüche

1. Detektionsvorrichtung für Partikel vom ohmschen Typ (30), umfassend:
- eine Kathode;
- ein Verstärkungs-Mikrogitter (32) und
- eine Anode (33), die sich aus einem ebenen Isolator (34) zusammensetzt, umfassend ohmsche Bahnen (35), die auf einer Seite des genannten ebenen Isolators (34) gegenüber dem Verstärkungs-Mikrogitter (32) angeordnet sind, und Lesebahnen (36), die auf der entgegengesetzten Seite der genannten isolierenden Ebene (34) angeordnet sind, wobei die genannten Lesebahnen (36) an einem Lesesystem (37) angeschlossen sind,
wobei die genannte Detektionsvorrichtung von Partikel vom ohmschen Typ (30) **dadurch gekennzeichnet ist, dass** sie eine Leiterbahn (38) umfasst, die zwischen zwei ohmschen Bahnen (35) positioniert ist.

2. Detektionsvorrichtung für Partikel vom ohmschen Typ (30) gemäß Anspruch 1, **dadurch gekennzeichnet, dass** sie wenigstens eine Leiterbahn (38) auf zehn ohmschen Bahnen (35) umfasst.

3. Detektionsvorrichtung für Partikel vom ohmschen Typ (30) gemäß Anspruch 1, **dadurch gekennzeichnet, dass** sie ein Abwechseln von Leiterbahnen (38) und ohmschen Bahnen (35) umfasst.

4. Detektionsvorrichtung von Partikeln vom ohmschen Typ (30) gemäß irgendeinem der voranstehenden Ansprüche, **dadurch gekennzeichnet, dass** die maximale Entfernung (d), die eine Leiterbahn (38) von einer benachbarten ohmschen Bahn (35) trennt, gleich der Hälfte des Schritts (p) ist, der zwei ohmsche Bahnen (35) trennt, die auf jeder Seite der Leiterbahn (38) angeordnet sind, abzüglich der Hälfte der Breite (L) der genannten Leiterbahn (38).

5. Detektionsvorrichtung für Partikel vom ohmschen Typ (30) gemäß irgendeinem der voranstehenden Ansprüche, **dadurch gekennzeichnet, dass** die elektrischen Anschlüsse der ohmschen Bahnen (35) und / oder Leiterbahnen (38) außerhalb einer abgedichteten Einfassung (39) angeordnet sind, die die Kathode (31), das Verstärkungs-Mikrogitter (32) und die Anode (33) umfasst.

6. Detektionsvorrichtung für Partikel vom ohmschen Typ (30) gemäß irgendeinem der voranstehenden Ansprüche, **dadurch gekennzeichnet, dass** die ohmschen Bahnen (35) und die Leiterbahn (38) voneinander physisch unabhängig sind.

7. Detektionsvorrichtung für Partikel vom ohmschen Typ (30) gemäß irgendeinem der voranstehenden Ansprüche, **dadurch gekennzeichnet, dass** sie wenigstens einen elektrischen Kontakt (40) umfasst, wobei der elektrische Kontakt (40) an ein erstes Ende einer ersten ohmschen Bahn (35) und an ein zweites Ende einer zweiten ohmschen Bahn (35) angeschlossen ist, wobei die zwischen den zwei ohmschen Bahnen (35) positionierte Leiterbahn (38) an dem wenigstens einen elektrischen Kontakt (40) durchtrennt ist, wobei zwei Abschnitte der Leiterbahn (38) miteinander über eine Verbindungsbahn (41) verbunden sind, die in einem ebenen Isolator (34) angeordnet ist.

8. Detektionsverfahren (100) für Partikel, das eine Detektionsvorrichtung für Partikel vom ohmschen Typ (30) gemäß irgendeinem der voranstehenden Ansprüche umsetzt, wobei das Detektionsverfahren (100) für Partikel im Detektionsmodus für Partikel die folgenden Schritte umfasst:
- Anwendung (101) einer ersten bestimmten elektrischen Spannung (HV1) auf die Kathode (31),
- Anwendung (102) einer zweiten bestimmten elektrischen Spannung (HV2) auf das Verstärkungs-Mikrogitter (32),
- Herstellung (103) einer elektrischen Verbindung zwischen den Lesebahnen (36) und dem Lesesystem (37),
- Herstellung (104) einer elektrischen Verbindung zwischen den ohmschen Bahnen (35) und einer Masse (M35) und
- Herstellung (105) einer schwebenden Verbindung mit der Leiterbahn (38).

9. Detektionsverfahren (100) für Partikel, das eine Detektionsvorrichtung für Partikel vom ohmschen Typ (30) gemäß irgendeinem der Ansprüche 1 bis 7 umfasst, wobei das Detektionsverfahren (100) für Partikel im Reinigungsmodus der Unreinheiten die folgenden Schritte umfasst:
- Anwendung (101) einer ersten bestimmten elektrischen Spannung (HV1) auf die Kathode (31),
- Anwendung (107) einer zweiten bestimmten elektrischen Spannung (HV2) oder einer Spannungsrampe auf das Verstärkungs-Mikrogitter (32),
- Herstellung (108) einer elektrischen Verbindung zwischen den Lesebahnen (36) und dem Lesesystem (37) oder einer schwebenden Verbindung der Listepisten (36),
- Herstellung (104) einer elektrischen Verbindung zwischen den ohmschen Bahnen (35) und einer Masse (M35) und
- Herstellung (106) einer elektrischen Verbindung zwischen der Leiterbahn (38) und einer Masse (M38).

10. Detektionsverfahren (100) für Partikel, das eine Detektionsvorrichtung für Partikel vom ohmschen Typ (30) gemäß irgendeinem der Ansprüche 1 bis 7 umsetzt, wobei das Detektionsverfahren (100) für Partikel im Verstärkungsoptimierungsmodus die folgenden Schritte umfasst:
- Anwendung (101) einer bestimmten ersten elektrischen Spannung (HV1) auf die Kathode (31),
- Anwendung (107) einer bestimmten zweiten elektrischen Spannung (HV2) oder einer Spannungsrampe auf das Verstärkungsmikrogitter (32)
- Herstellung (103) einer elektrischen Verbindung zwischen den Lesebahnen (36) und dem Lesesystem (37),
- Herstellung (104) einer elektrischen Verbindung zwischen den ohmschen Bahnen (35) und einer Masse (M35) und
- Anwendung (109) einer bestimmten dritten elektrischen Spannung (HV3) auf die Leiterbahn (38), wobei die genannte bestimmte dritte elektrische Spannung (HV3) negativ ist.

## Claims

1. Resistive type particle detection device (30) including:
- a cathode (31),
- an amplification micro-gate (32), and
- an anode (33) composed of a flat insulator (34) comprising resistive tracks (35) arranged on a face of said flat insulator (34) facing the amplification micro-gate (32) and reading tracks (36) arranged on the opposite face of said flat insulator (34), said reading tracks (36) being connected to a reading system (37),
said resistive type particle detection device (30) being **characterised in that** it comprises a conductive track (38) positioned between two resistive tracks (35) .

2. Resistive type particle detection device (30) according to claim 1 **characterised in that** it comprises at least one conductive track (38) out of ten resistive tracks (35).

3. Resistive type particle detection device (30) according to claim 1 **characterised in that** it comprises an alternation of conductive tracks (38) and resistive tracks (35).

4. Resistive type particle detection device (30) according to any of the preceding claims **characterised in that** the maximum distance (d) separating a conductive track (38) from a neighbouring resistive track (35) is equal to half of the step (p) separating two resistive tracks (35) situated on either side of the conductive track (38) less half of the width (L) of said conductive track (38).

5. Resistive type particle detection device (30) according to any of the preceding claims **characterised in that** the electric connections of the resistive tracks (35) and/or conductive tracks (38) are situated outside of a sealed enclosure (39) comprising the cathode (31), the amplification micro-gate (32), and the anode (33).

6. Resistive type particle detection device (30) according to any of the preceding claims **characterised in that** the resistive tracks (35) and the conductive track (38) are physically independent of each other.

7. Resistive type particle detection device (30) according to any of the preceding claims **characterised in that** it comprises at least one electric contact (40), the electric contact (40) being connected at a first end to a first resistive track (35) and at a second end to a second resistive track (35), the conductive track (38) positioned between the two resistive tracks (35) being sectioned at the level of the at least one electric contact (40), two sections of the conductive track (38) being connected together via a connection track (41) arranged in the flat insulator (34) .

8. Method (100) for detecting particles implementing a resistive type particle detection device (30) according to any of the preceding claims, the method (100) for detecting particles comprising, in particle detection mode, the following steps:
- Application (101) of a first determined electric voltage (HV1) to the cathode (31),
- Application (102) of a second determined electric voltage (HV2) to the amplification micro-gate (32),
- Establishment (103) of an electric connection between the reading tracks (36) and the reading system (37),
- Establishment (104) of an electric connection between the resistive tracks (35) and a ground (M35), and
- Establishment (105) of a floating connection to the conductive track (38).

9. Method (100) for detecting particles implementing a resistive type particle detection device (30) according to any of claims 1 to 7, the method (100) for detecting particles comprising, in impurities cleaning mode, the following steps:
- Application (101) of a first determined electric voltage (HV1) to the cathode (31),
- Application (107) of a second determined electric voltage (HV2) or a voltage ramp to the amplification micro-gate (32),
- Establishment (108) of an electric connection between the reading tracks (36) and the reading system (37) or a floating connection of the reading tracks (36),
- Establishment (104) of an electric connection between the resistive tracks (35) and a ground (M35), and
- Establishment (106) of an electric connection between the conductive track (38) and a ground (M38).

10. Method (100) for detecting particles implementing a resistive type particle detection device (30) according to any of claims 1 to 7, the method (100) for detecting particles comprising, in amplification optimisation mode, the following steps:
- Application (101) of a first determined electric voltage (HV1) to the cathode (31),
- Application (107) of a second determined electric voltage (HV2) or a voltage ramp to the amplification micro-gate (32),
- Establishment (103) of an electric connection between the reading tracks (36) and the reading system (37),
- Establishment (104) of an electric connection between the resistive tracks (35) and a ground (M35), and
- Application (109) of a third determined electric voltage (HV3) to the conductive track (38), said third determined electric voltage (HV3) being negative.
